# EUROPEAN PATENT APPLICATION

(11) **EP 2 458 780 A1**
(43) Date of publication of application: **30.05.2012**
(21) Application number: 10252014.5
(22) Date of filing: 26.11.2010
(51) Int. Cl.: H04L 12/18, H04L 29/06

(54) **Cyclic data delivery using a multicast scheme**

(71) Applicant: British Telecommunications Public Limited Company, London EC1A 7AJ (GB)
(72) Inventor: The designation of the inventor has not yet been filed
(74) Representative: Chan, Robin

(57) **Abstract**

A cyclic multicasting scheme between a server and plurality of receivers. The server is arranged to cyclically send data packets forming requested data content to any requesting receivers. The multicast delivery is initiated as soon as a one receiver has requested the content and other receivers can be added to the set of multicast receivers after the start of the multicast transmission and start to receive data packets midway through the transmission. The server repeatedly sends the data content to the listed receivers. Each receiver is responsible to re-ordering the received data packets and once the set is completely received, each receiver sends a message to the server to be removed from the list of receivers.

## Description

The present invention relates to data delivery from a data server to a plurality of receivers using a multicast scheme and in particular with cyclic delivery of data packets from the data server to a plurality of multicast receivers.

### Background

To deliver data sets such as a multimedia file or streaming content from a server to a receiver via a network, it is known in the art for the server to divide the file/content into a series of data packets and to send these packets across the data network using known techniques. Each packet has a destination address set to the network address of the receiver.

The data delivery technique is relatively simple in the case where the server only needs to send data to a single receiver. ln cases where it is desired to send the same data set to a number of receivers, three main schemes are known in the art.

The simplest scheme is known as unicasting and involves simply sending the data set to each receiver without any regard for the other receivers. ln other words if four receivers have requested the same data set, then the server divides the data set four times and sends four complete copies of the data set across the network. This is clearly inefficient in terms of the processing required by the server to replicate the data set and also in terms of the bandwidth burden placed on the network. The requirements increase at the server and on the network as the number of receivers increase.

The second known scheme is known as broadcasting and involves the server addressing the data packets to a particular network broadcast address. This causes the network to deliver the data set to every possible receiver on the network. This reduces the amount of processing required at the server but still places load on the network as the nodes and routers forming the network must replicate the data packets and forward them to downstream nodes and eventually to all possible receivers on the network. Since it is rare for every possible receiver to require the same data set at the same time, broadcast is generally inefficient.

To try to improve on the limitations of the above unicast and broadcast schemes, a third scheme, multicasting has been developed. ln multicasting, the server only requires one copy of the data set for transmission but can address each of the data packets in the data set to more than one destination address. Therefore the processing requirements on the server are reduced compared with unicasting and the network load is reduced compared with unicasting and broadcasting.

Furthermore, only those receivers which request the data will receive it.

However, there are some restrictions with the multicast scheme. ln particular, the server will typically wait until a threshold number of requests for the data set have been received before starting the multicast so there can be large delays for the early requesters. Furthermore, any requests for the data set received after the start of multicast transmission cannot be serviced while an existing multicast is underway. It is therefore necessary for the server to implement scheduling with the requesters which adds complexity to the server.

The present invention is concerned with addressing the above limitations of multicast transmission.

US6256673 describes a network system for cyclic multicasting of an image file from a central server to one or more workstations over a computer network. In this system, the server cyclically sends the image file to any active workstations. ln this way workstations can immediately start to receive the image file packets after making a request and workstations making a request after the start of the multicast transmission can start receiving parts of the image file without delay. Earlier missed packets can be received in the next transmission cycle. The server is responsible for monitoring the state of each workstation and determines when they have fully received the file.

The system in US6256673 therefore requires extensive server processing to monitor the condition of each client.

### Statements of invention

ln one aspect, the present invention provides a method of delivering data content from a server to a set of receivers via a data network, the method comprising: the server cyclically sending a set of multicast data packets forming the data content, to the set of receivers; and each receiver within the set performing the steps of: processing and storing each received multicast data packet; reordering the set of received multicast data packets; and sending a message to the server when the set of multicast data packets has been completely received so as to be removed from the set of receivers.

In another aspect, the present invention provides a data delivery system comprising a server and a plurality of receivers connected via a data network, wherein: the server is arranged to cyclically send a set of multicast data packets forming the data content, to the set of receivers; and each receiver within the set is arranged to: process and store each received multicast data packet in a data buffer; reorder the set of received multicast data packets; and send a message to the server when the set of multicast data packets has been completely received so as to be removed from the set of receivers.

### Description of the drawings

Figure 1 shows an overview of the operation of the server and receivers according to an embodiment of the invention;
Figure 2 shows the internal components of the server illustrated in Figure 1;
Figure 3 shows the internal components of each receiver illustrated in Figure 1;
Figure 4 shows the notional functional components of the server illustrated in Figure 2;
Figure 5 shows the notional functional components of each receiver illustrated in Figure 3;
Figures 6 to 14 show a sequence of data packets from the server to the receivers according to the first embodiment;
Figure 15 shows the processing steps performed by the server when a new request is received from one of the receivers;
Figure 16 shows the processing steps performed by the server when a stop request is received from one of the receivers;
Figure 17 shows the processing steps performed by the server during cyclic data transmission in accordance with the invention; and
Figure 18 shows the processing steps performed by each receiver in accordance with the first embodiment.

### Description

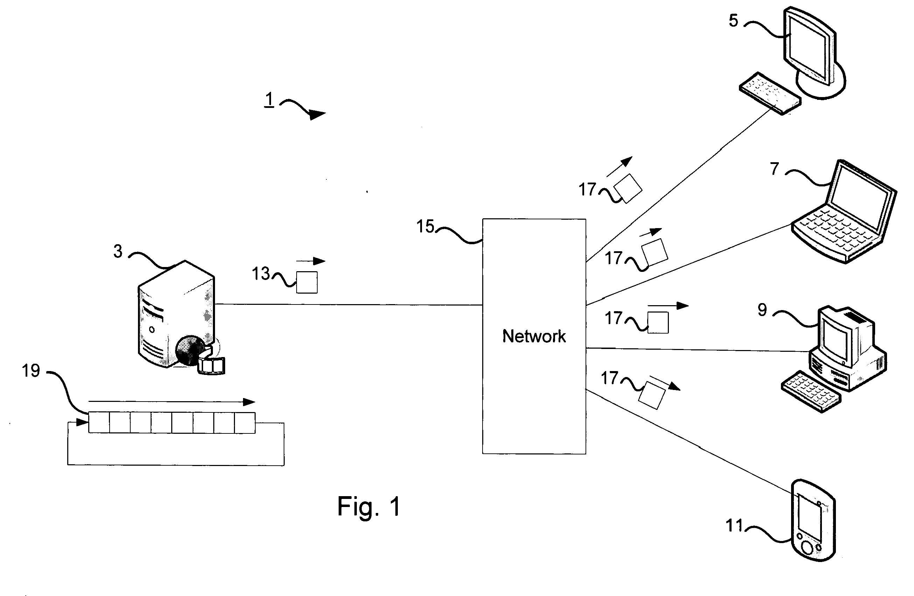

Figure 1 shows an overview of a first embodiment. Within the overall cyclic data transmission system 1 a server 3 sends data to receivers 5, 7, 9, 11 such as a computer 5, a laptop computer 7, a desktop computer 9 and a mobile PDA or tablet device 11.

ln accordance with the multicast scheme, for each packet 13 that the data server 3 sends addressed to the multicast receivers 5, 7, 9, 11 via a network 15, the network is arranged to replicate the packet 13 at the appropriate stage of delivery such that multiple replicated multicast packets 17 of the sent packet 13 are delivered. The number of replicated multicast packets 17 corresponds to the number of multicast receivers.

As will be described in more detail below, in this embodiment, the server 3 is arranged to send the complete set of data cyclically such that it is not necessary for the multicast receivers 5, 7, 9, 11 to synchronise the initiation of the multicast delivery. The multicast receivers are aware of the cyclic nature of the multicast from the server and can perform functions to reorder packets received from the server and to terminate the connection with the server when they determine that the complete data set has been received. ln this way, the server can be simplified by moving more control logic to the receiver side.

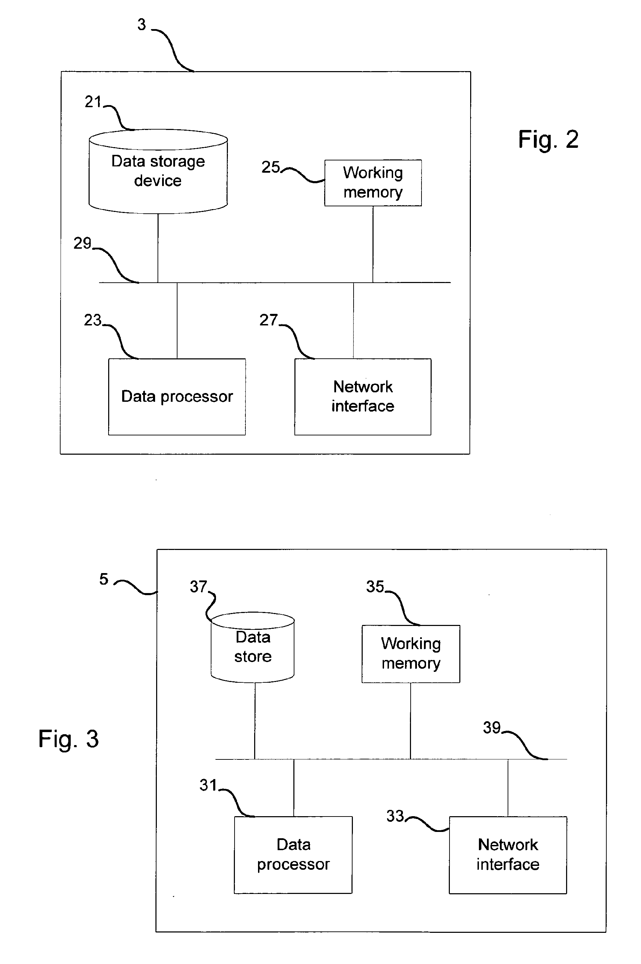

Figure 2 shows the main physical components of the server 3. The server 3 contains a persistent data storage device 21, a data processor 23, working memory 25 and a network interface 27. These components are logically connected via an internal data bus 29.

Figure 3 shows the main physical components of a receiver 5, 7, 9, 11. The physical structure of each receiver 5, 7, 9, 11 is similar to the server in that it contains a data processor 31, a network interface 33, working memory 35 and a persistent data storage device 37. These components are logically connected via an internal data bus 39.

Although physically similar, the server and each client are configured to behave differently when computer program instructions stored in the respective persistent data storage devices 21, 37 are executed on the respective processor 23, 31 which configure the processors 23, 31 and other physical components to behave in accordance with the first embodiment. These instructions may be provided to the persistent data storage devices via a suitable computer program product or storage medium onto which the instructions have been loaded.

As such, for ease of explanation, the server and receivers will be described in terms of the functional behaviour when the respective computer program instructions are being executed.

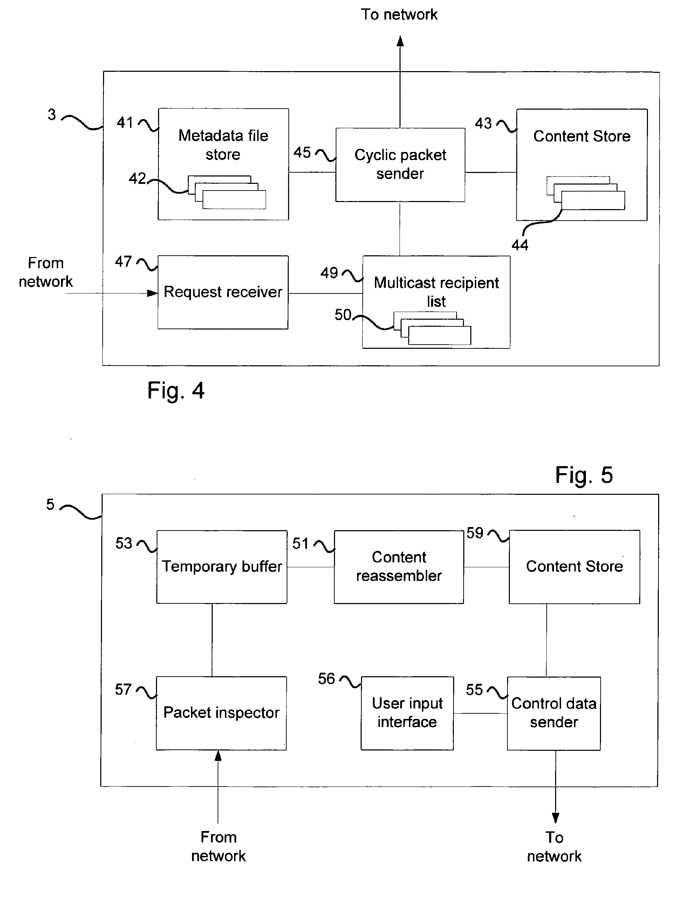

Figure 4 shows the functional components of the server 3 when configured as a server according to the first embodiment. The functional components include a metadata file store 41 containing various metadata files 42, a content store 43 containing data sets 44 such as files and disk images, a cyclic packet sender 45, a request receiver 47 and a multicast recipient list store 49.

The data sets 44 stored in content store 43 are for distribution to receivers 5, 7, 9, 11 across the network. Each data set 44 has a corresponding metadata file 42 stored in the metadata file store 41 and a corresponding multicast recipient list 50 in multicast recipient list store 49. The request receiver 47 listens for requests for data sets 44 from the receivers 5, 7, 9, 11 and updates the appropriate multicast recipient list 50 accordingly. The cyclic packet sender 45 sends metadata files 42 and packets forming the data set 44 to the any requesters 5, 7, 9, 11 defined in the multicast recipient list 50.

Figure 5 shows the functional components of each receiver 5, 7, 9, 11. The functional components include a content reassembler 51, a temporary buffer 53, a control data sender 55, a user input interface, a packet inspector 57 and a content store 59.

The control data sender 55 is responsible for receiving user commands for a particular data set 44 and sending requests for the data set 44 to the server 3, and for sending termination requests to disconnect from the server 3 when the complete data packets forming the data set 44 have been received. The packet inspector 57 is responsible for monitoring the incoming data packets and placing them into temporary content store 53. Content reassembler 51 reorders the sequence of the data packets if necessary into the content store 59.

As mentioned earlier, the first embodiment differs from conventional multicast data delivery because it is not necessary to wait for a threshold number of multicast receivers to request a particular data set before initiating the multicast transfer. Similarly, receivers which request the data set after the start of a multicast transmission are not forced to wait for the next complete multicast transmission.

ln particular, the cyclic data transmission system defined by the operation of the server 3 and each receiver 5, 7, 9, 11 allows the server 3 to initiate multicast transmission as soon as a one of the receivers 5, 7, 9, 11 has requested the content. Furthermore, other receivers requesting the previously requested content can start receiving multicast packets from part way through the transmission.

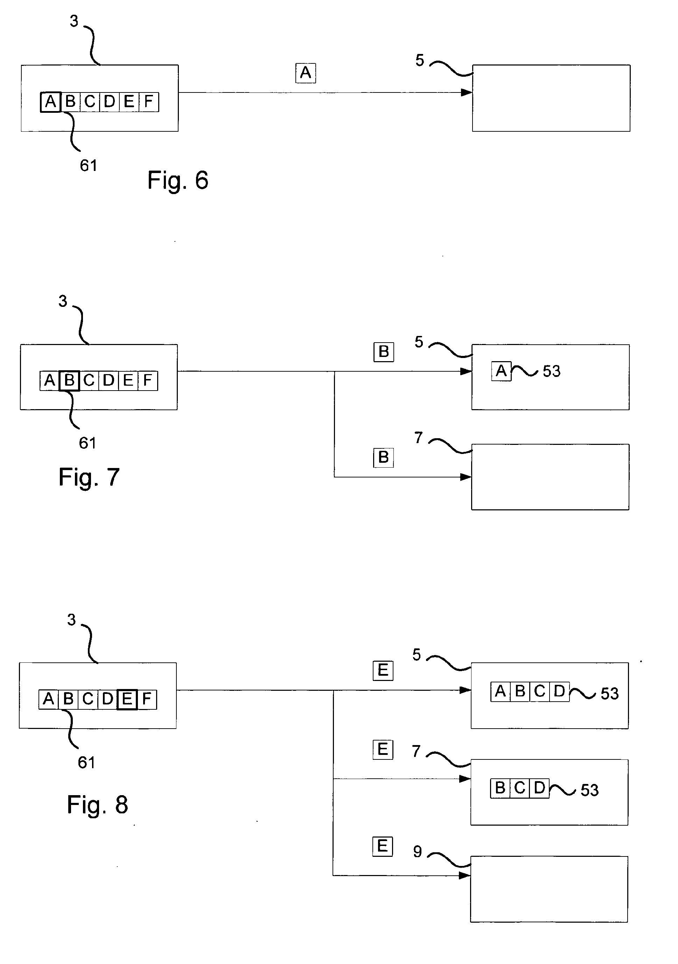

For ease of explanation, an example of the overall operation of the cyclic data delivery system 1 will be described with reference to Figures 6 to 14.

Figure 6 shows the server 3 with an example audio file 61 within the content store 43. The audio file 61 contains six packets A, B, C, D, E and F and the audio file 61 is delivered by cyclic multicasting in accordance with the first embodiment. Although not shown in Figure 6, when computer 5 requests the audio file 61, the server 3 sends the metadata file 63 associated with the audio file 61 so that the computer 5 has information relating the number of packets contained within the audio file 61.

The metadata file 63 in this embodiment contains information relating to the size of the data packets and the number of data packets which will be transmitted. This provides the requester with advance knowledge of what will be received and the temporary buffer 53 and the content reassembler 51 can be configured accordingly.

As shown in Figure 6, the server 3 transmits the first packet A of the audio file without waiting for a threshold number of multicast requests to be received. In this way the operation is similar to a unicast data transmission.

Figure 7 shows a later stage of the transmission where packet A has been received by computer 5 into its temporary buffer 53. Now a second receiver, the laptop 7 has requested the audio file 61 from the server 3. lnstead of starting a new unicast transmission, or delaying transmission until the audio file has been completely received by computer 5, the server 3 sends the metadata file 63 to the laptop 7. Then the server transmits the next packet in the sending sequence, packet B, addressed as a multicast packet to the computer 5 and the laptop 7. As is conventional, the network 15 ensures that packet B is replicated at the correct point of delivery so that the computer 5 and the laptop 7 receive a copy of packet B.

At computer 5, the received packet B is inspected by the packet inspector 57 and stored in the temporary buffer 53 alongside the previously received packet A. Laptop 7 also receives packet B into its respective temporary buffer 53. ln this case, it does not matter that packet B is the first stored packet because the content reassembler 51 will handle the re-sequencing later.

ln Figure 8, a third receiver, the computer 9 has requested the audio file 61 as packet E is being delivered. Packets C and D were transmitted without any changes. Before sending packet E, the server 3 adds the computer 9 to the list of multicast receivers and then transmits the multicast packet E to the computer 5, the laptop 7 and the computer 9.

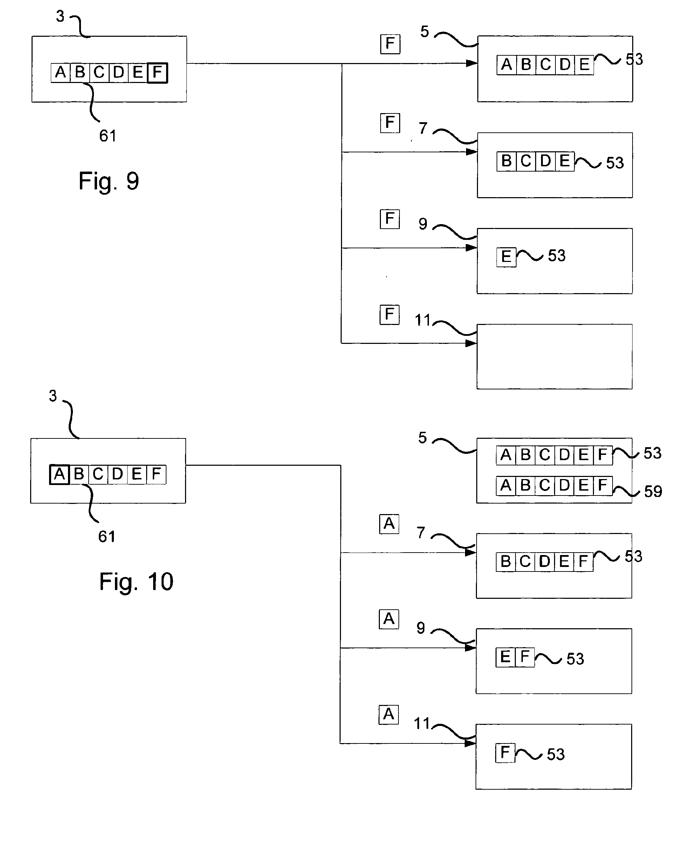

ln Figure 9, after the server 3 has transmitted packet E but before it transmits packet F, the PDA 11 requests the audio file. Therefore the server 3 adds the PDA 11 to the list of multicast receivers before sending packet F. At this point, the server has sent the complete audio file 61 formed of packets A, B, C, D, E and F. computer 5 has received the complete audio file, while the other receivers 7, 9 and 11 are missing at least one of the data packets of the audio file. For the computer 5, the content reassembler 51 does not need to reorder the packets in the temporary buffer 53 and therefore it simply transfers the content of the data packets into the content store 59.

Figure 10 shows the operation of the cyclic data transmission. As mentioned earlier in Figure 9, the server 3 has completed sending the audio file 61. Computer 5 has the complete audio file 61 and has unregistered itself as a multicast receiver for future transmission. ln this embodiment, the server 3 maintains a list of multicast clients but does not need to be aware of the state of each of those receivers' temporary buffers 53. Therefore it is configured to simply check whether any multicast receivers are present and if so, it transmits packet A again to those receivers in the list.

As shown in Figure 10, computer 5 has terminated its connection to the server 3 because it has the full set of packets. Laptop 7 receives packet A and then has and the complete audio file 61. It therefore sends a message to the server 3 to remove itself from the list of multicast receivers. Meanwhile computer 9 and PDA 11 store packet A in their respective temporary buffers 53.

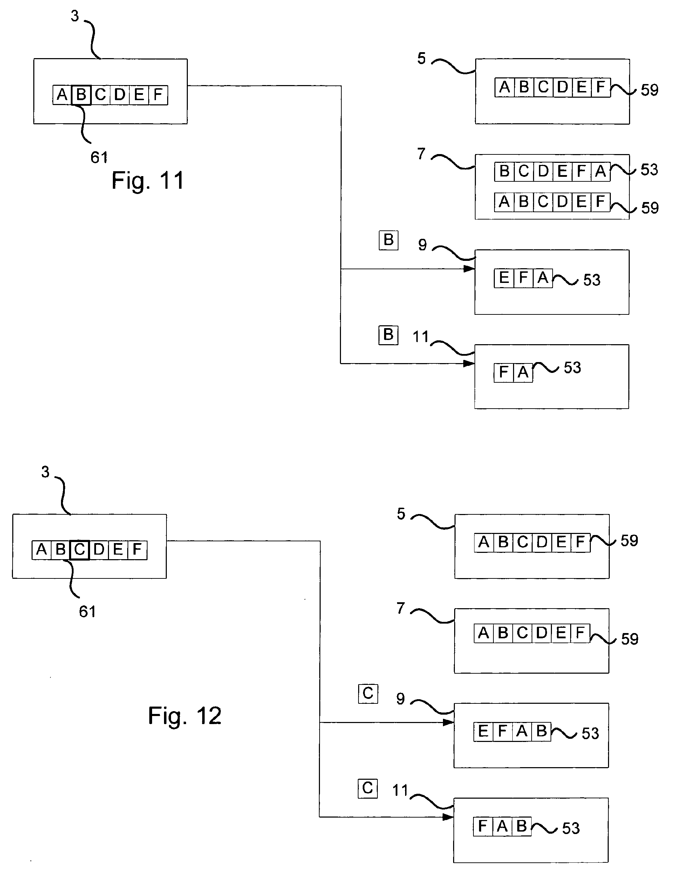

Figure 11 shows how the laptop 7 has terminated its connection to the server 3 as a multicast recipient after receiving packet A. Furthermore the packet reassembler 51 of the laptop 7 has ordered the received packets into the correct order before storage in content store 59.

Server 3 sends packet B only to computer 9 and PDA 11.

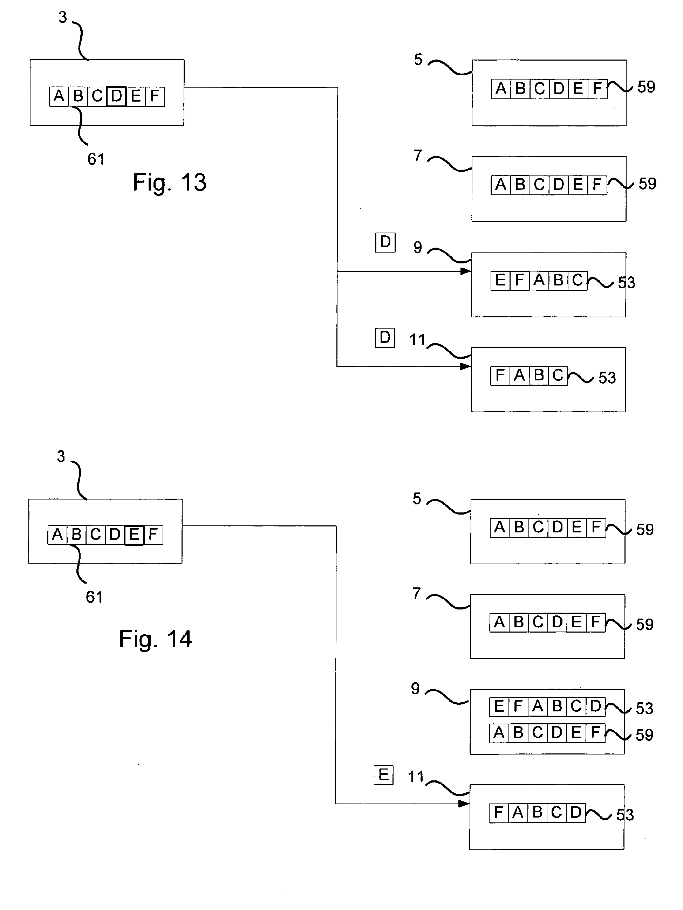

Figure 12 shows the re-transmission of packet C and Figure 13 shows the re-transmission of packet D.

After packet D has been received by the computer 9, it has the complete audio file and so sends a message to the server 3 to remove itself from the list of multicast receivers.

Figure 14 shows the retransmission of packet E from the server 3 to the only remaining receiver in this example, PDA 11. After this packet has been delivered to PDA 11, the PDA 11 sends a control message to the server 3 to remove itself from the list of multicast receivers. At this point all four receivers have a complete copy of the audio file 61. The cyclic multicast transmission therefore ends as there are no recipients.

lf a new request for the audio file is received, then the server 3 would begin transmission of the audio file from packet A.

Having provided an overview of the operation of the transmission system, the processing of various functional components within the server will now be described.

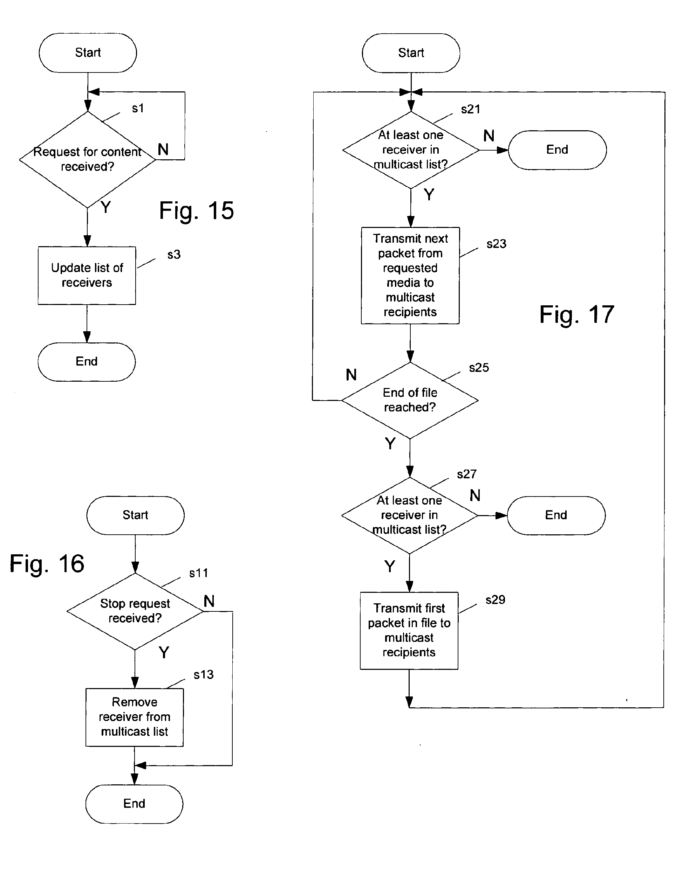

Figure 15 is a flowchart showing the processing of the request receiver 47. This functional unit periodically polls for new requests for content in step s1 and if no requests are pending, no action is taken. If a request is received, processing proceeds to step s3 where the request is examined to extract the identity of the file/content being requested and the lP address of the requester. This data is stored in an appropriate multicast recipient list 50 within the multicast recipient list store 49.

In this embodiment, a recipient list 50 is created to correspond to each piece of content stored in the content store 43. This is because the server 3 can serve multiple pieces of content at any given time.

Figure 16 shows another operation of the request receiver 47 in the server 3. In step s11 the received request is checked to see if it is a stop request. lf it is not then processing for this part ends. If the request is deemed to be a request to be removed from the recipient list, then in step s13 the receiver which issued the request is removed.

Figure 17 shows the processing of the cyclic packet sender 45 within the server 3 for sending each packet of multicast data for a particular file/content 44.

In step s21, the cyclic packet sender 45 checks the appropriate multicast recipient list 50 corresponding to the requested file/content 44 and if the list 50 is empty the processing ends as there are no active receivers.

lf there is at least one receiver in the multicast recipient list 50 then in step s23 the packet is transmitted to the multicast recipients defined. In step s25 a test is performed to determine if the end of the file has been reached and therefore is cyclic retransmission is required. If the end of the file has not been reached, then processing returns to step s 21.

lf the end of the file has been reached, then in step s27 a check similar to that in step s21 is performed to ensure that at least one receiver is still listed in the multicast recipient list 50. lf there is not, then the processing ends.

lf multicast recipients are still in the list 50, then processing proceeds to step s 29 and the cyclic packet sender 45 sends the first packet of the requested content. Processing then returns to step s21.

As will be clear from the above, the processing to manage the multicast recipient lists 50 and the processing to send data cyclically can be run as independent parallel processes.

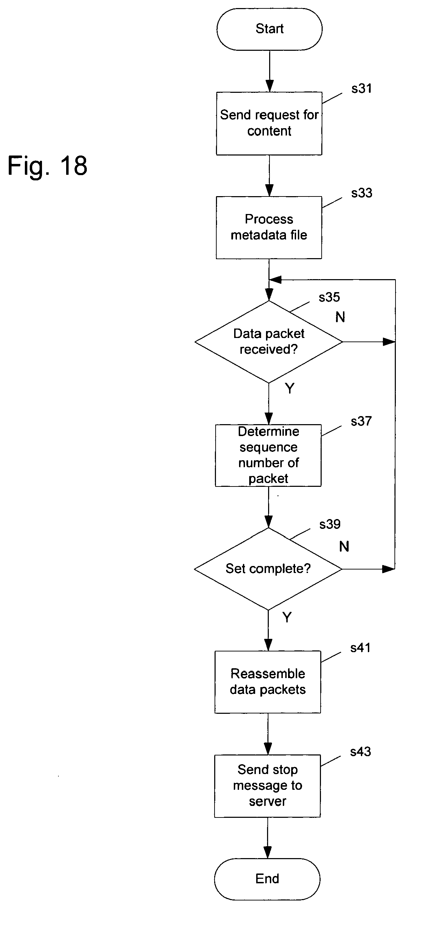

The processing of the receivers will now be described. Figure 18 is a flowchart showing the operation of each receiver 5, 7, 9, 11. Once a user of the device has issued a command for a particular piece of content via user input 56, in step s31 the control data sender 55 issues a request for the desired content to the server 3. The request identifies the desired content, for example the file name of the audio file 61 in the earlier example, and also the network address of the receiver so that it can be added to the list of multicast receivers in multicast recipient list 50.

As explained earlier, in response to the request, the server 3 returns a metadata file 42 describing parameters and characteristics of the requested file. Therefore in step s33 the packet inspector 57 of the receiver 5, 7, 9, 11 processes the metadata file 42 and configures the temporary buffer 53.

The packet inspector 57 of the receiver waits for the packets carrying the requested content to arrive and in step s35 a test is performed to see whether a data packet has been received on the network interface 33. lf packets have not been received then the processing returns to step s35. However, if a packet has been received, then the packet inspector 57 determines the sequence number or identity of the received packet in step s37 and the packet is stored in the temporary buffer 53.

ln step s39 the packet inspector 57 performs a test to check whether the complete file has been received based on the information given in the metadata file. lf the transmission is not complete, processing returns to step s35.

However, if step 39 determines that the complete set of packets has been received, then in step s41 the content reassembler 51 reorders the content of the data packets into content store 59 so that the requested content can be decoded/processed by higher level applications.

Finally the control data sender 55 terminates the connection to the server 3 at step s43 by sending a stop request to the server in order to remove receiver's network address from the list of multicast receivers.

ln the first embodiment the system of efficient data delivery to multiple receivers is described. The server is arranged to transmit the same data cyclically and continues to do so while there are still multicast receivers requesting the data. The receivers are arranged to request the content and are responsible for checking that they have the complete set of data before terminating the connection to the server.

This system is advantageous because it allows the implementation of the server to be relatively simple. Each receiver is responsible for managing its own data which further negates the need for excessive control information to be passed between the server and each receiver.

### Second Embodiment

In the first embodiment, it is assumed that the data packets sent on the multicast scheme to the receivers are always received correctly. Therefore as soon as the set of packets is complete, then the connection to the server is terminated by the receiver. In the second embodiment, the operation of the server and receivers are generally the same but in the first embodiment, however, the receivers are arranged to perform further checks on the received data packets to verify the requested content has been successfully received before terminating the connection to the server.

Returning to the earlier example, if the computer 5 did not correctly receive packet B, then instead of terminating the connection to the server 3 upon reception of packet F, the computer 5 would wait for the cyclic sending of the server 3 to re-transmit packet B before terminating the connection to the server 3.

To implement this feature, the packet inspector 57 of the receiver is arranged to log incorrectly received or missing packets in a missing packets store. The processing of the receiver is generally the same as described in Figure 18 but step s39 further includes checking the missing packet store to identify missing packets and waiting for those missing packets to be received before sending a stop message to the server 3. Any duplicates of packets which have been previously successfully received are discarded.

This processing is advantageous as it removes the requirement for explicit retransmission protocols to be implemented by the server. ln particular, it allows the server to send content using a lightweight unreliable transmission protocol such as UDP. This simplifies the server because it does not need to be concerned with multicast retransmission.

### Alternatives and Modifications

ln the embodiments, the server is responsible for maintaining the list of receivers. ln an alternative, a separate network entity acts as a proxy to the server. The receivers send requests for content to the proxy entity which keeps a distribution tree of the requesters and the server consults this external list when sending packets with the multicast addresses.

In a further alternative, there are multiple proxy entities which redistribute the content from the server to different sections of the network.

In the embodiments the received data packets were received into a temporary buffer until the requested media content was completely received. For larger files, storing all of this data temporarily would require a significant storage overhead. Therefore in a modification, the temporary buffer is a fixed small size and the packet reassembler is arranged to process and reorder any partial data in the buffer at fixed periodic intervals or when the amount of data in the temporary buffer reaches a predetermined level.

In the embodiments, the server stores the data sets within the content store. In an alternative, the data sets and metadata files are remotely stored from the server. The server upon receiving the request for a data set performs a retrieval operation for the data set from the remote storage and sends it to the requester using the cyclic multicast scheme.

ln the embodiments, the server sent a single contiguous file to the multicast receivers. To improve performance, in an alternative, the server is arranged to split content into several streams and to cyclically deliver each stream to the receivers for reassembly. This places more burden on the receivers to process the packets but decreases the time between retransmission of individual packets forming the content.

In a further modification, the content is replicated across several servers. The receivers send requests for content to a proxy which is aware of the content distribution and each server sends a subset of the data packets forming the content to each requester.

In the embodiments, the requesters, simply store any data packets which are received. In the case of streaming data such as particular types of video or audio, the data that has been received could be presented on the requester. This would allow a user to get a preview of the data set content and if the user changes their mind, the data transfer can be terminated early.

## Claims

1. A method of delivering data content from a server to a set of receivers via a data network, the method comprising:
the server cyclically sending a set of multicast data packets forming the data content, to the set of receivers; and
each receiver within the set performing the steps of:
processing and storing each received multicast data packet;
reordering the set of received multicast data packets; and
sending a message to the server when the set of multicast data packets has been completely received so as to be removed from the set of receivers.

2. A method according to claim 1, further comprising the step of maintaining a log of missing multicast data packets at each receiver and sending the stop message only occurs when where there are no missing packets identified in the log.

3. A method according to any preceding claim, wherein the data content is divided into at least two subsets, and the server further performs the steps of:
cyclically sending each subset of multicast data packets forming each subset of divided data content in a separate stream; and
each receiver performs the steps of:
processing and storing packets associated with each subset of data content into a common buffer.

4. A method according to any preceding claim, wherein the identity of the set of receivers requiring multicast data packets is stored on a list within a proxy server.

5. A data delivery system comprising a server and a plurality of receivers connected via a data network, wherein:
the server is arranged to cyclically send a set of multicast data packets forming the data content, to the set of receivers; and
each receiver within the set is arranged to:
process and store each received multicast data packet in a data buffer;
reorder the set of received multicast data packets; and
send a message to the server when the set of multicast data packets has been completely received so as to be removed from the set of receivers.

6. A system according to claim 5, wherein at least one of the receivers in the set of receivers is arranged to maintain a log of missing multicast data packets and to send the stop message only when where there are no missing packets identified in the log.

7. A system according to claim 5 or 6, wherein the data content is divided into at least two subsets, and the server is arranged to cyclically send each subset of multicast data packets forming each subset of divided data content in a separate stream; and
each receiver is arranged to:
process and store packets associated with each subset of data content into a common buffer.

8. A system according to any of claims 5 to 7, wherein the identity of the set of receivers requiring multicast data packets is stored on a list within a proxy server.
